# DEMANDE DE BREVET EUROPEEN

(11) **EP 0 933 912 A1**
(43) Date de publication de la demande: **04.08.1999**
(21) Numéro de dépôt: 99400050.3
(22) Date de dépôt: 11.01.1999
(51) Int. Cl.: H04M 1/72, H04B 7/185

(54) **Ensemble de radiocommunication, du type comprenant un terminal cellulaire mobile, un module satellite mobile et au moins un accessoire**

(30) Priorité: 02.02.1998 FR 9801135
(71) Demandeur: ALCATEL, 75008 Paris (FR)
(72) Inventeur: Aucoeur, Jean Pierre, 95240 Cormeilles (FR)
(74) Mandataire: Feray, Valérie

(57) **Abrégé**

L'invention concerne un ensemble de radiocommunication, du type comprenant un terminal cellulaire mobile (1) et un module satellite mobile (2). Selon l'invention, cet ensemble comprend en outre : - au moins un premier accessoire (3) connecté au module satellite, le terminal cellulaire étant connecté au module satellite ou au premier accessoire, le premier accessoire permettant à l'ensemble de radiocommunication de présenter au moins un mode de fonctionnement supplémentaire; - des moyens de sélection de l'un des modes de fonctionnement ; - des premiers moyens d'aiguillage (39, 40), commandés par les moyens de sélection de façon à aiguiller les signaux utiles : depuis, respectivement vers, les moyens d'émission/réception (10 à 13) du terminal cellulaire ou ceux (30 à 33) du module satellite, en fonction du mode de fonctionnement sélectionné, et vers, respectivement depuis, des moyens de traitement compris dans l'ensemble et dont le choix est fonction du mode de fonctionnement sélectionné.

## Description

Le domaine de l'invention est celui des systèmes de radiocommunication cellulaires.

Plus précisément, l'invention concerne un ensemble de radiocommunication du type comprenant notamment un terminal cellulaire et un module satellite, et permettant l'accès d'une part à un système traditionnel à relais terrestres et d'autre part à un système à relais satellites.

De façon classique, chaque abonné d'un système cellulaire dispose d'un terminal mobile lui permettant d'accéder, via des relais radio (ou stations de base), aux différents services de radiocommunications offerts par le système.

Traditionnellement, les systèmes de radiocommunication cellulaires utilisent des relais terrestres. Ceci est notamment le cas des systèmes selon le standard GSM 900 (pour "Groupe spécial Systèmes Mobiles publics de radiocommunication fonctionnant dans la bande des 900 Mhz"), DCS 1800 ("Digital Cellular System 1800 MHz" en anglais) ou encore PCS (pour "Personal Communication System" en anglais).

Par ailleurs, de récents projets novateurs de communication avec des mobiles prévoient le remplacement des relais terrestres par des relais satellites. En d'autres termes, ces projets proposent d'utiliser des satellites, qui défileraient par exemple en orbites basses au-dessus de la terre, comme relais dans une sorte de réseau cellulaire à l'échelle de la planète. Les services offerts par de tels systèmes à relais satellites sont parfois notés MSS, pour "Mobile Satellite Services" en anglais.

On est donc aujourd'hui amené à distinguer deux types de systèmes de radiocommunication cellulaires, l'un utilisant des relais terrestres et l'autre des relais satellites. Dans la pratique, on s'aperçoit que ces deux types de systèmes ne s'opposent pas mais visent plutôt à répondre à des besoins distincts. En effet, les systèmes à relais satellites sont plutôt adaptés à la couverture de zone de très faible densité et on imagine donc aisément le complément que de tels systèmes peuvent apporter en matière de services rendus aux abonnés des systèmes traditionnels à relais terrestres.

Il est donc fort probable qu'à l'avenir, un même utilisateur sera abonné d'une part à un premier système cellulaire à relais terrestres et d'autre part à un second système cellulaire à relais satellites.

Une première solution consiste donc à munir ce double abonné de deux terminaux mobiles, l'un lui permettant d'accéder, via les relais terrestres, aux différents services du premier système, et l'autre lui permettant d'accéder, via les relais satellites, aux différents services du second système.

Cette première solution n'est satisfaisante ni en termes de coûts, ni en termes d'encombrement. En effet, la nécessité d'avoir à portée de main deux terminaux mobiles complètement indépendants constitue pour le double abonné une gêne aisément compréhensible. En outre, on s'aperçoit que les deux terminaux mobiles comprennent des éléments identiques, dont la redondance ne fait qu'augmenter le coût global de l'ensemble des deux terminaux.

Il a donc été proposé une seconde solution, consistant à remplacer le terminal permettant l'accès au second système cellulaire à relais satellites par un module satellite mobile non autonome mais beaucoup plus simple. Le double abonné dispose dans ce cas d'un ensemble de radiocommunication comprenant un (seul) terminal cellulaire (pour accéder au premier système cellulaire à relais terrestres) et un module satellite. Le module satellite se présente par exemple sous la forme d'un boîtier distinct du terminal cellulaire, que l'utilisateur fixe sur le terminal cellulaire quand il souhaite que l'ensemble fonctionne selon un mode "satellite". Dans ce mode "satellite", certains moyens du terminal cellulaire sont réutilisés, à savoir ceux dont ne dispose pas le module satellite (tels que par exemple un microphone, un haut-parleur, un clavier, un écran, ...).

On comprend que le module satellite est moins complexe, et par là même moins coûteux et moins encombrant, qu'un terminal cellulaire complet (ce dernier permettant à lui seul l'accès à un système cellulaire à relais satellites). Cette seconde solution pallie donc les inconvénients de la première solution précitée.

En revanche, cette seconde solution connue ne permet pas actuellement l'utilisation d'un (ou plusieurs) accessoire(s) avec le terminal cellulaire ou le module satellite. En effet, la mise en coopération du terminal cellulaire avec le module satellite consiste à faire coopérer le(s) connecteur(s) du terminal cellulaire avec celui(ceux) du module satellite. Par exemple, le terminal cellulaire peut comprendre un seul connecteur, utilisé pour les signaux utiles comme pour le courant de charge, et qui est placé sur le dessous du terminal. Par conséquent, le connecteur du terminal cellulaire et celui du module satellite ne sont plus disponibles, et il est impossible d'utiliser un accessoire, que ce soit avec le terminal cellulaire ou avec le module satellite.

On rappelle qu'avec un terminal cellulaire classique, l'utilisateur peut utiliser notamment les accessoires suivants :
- un accessoire de voiture (ou "car kit"), assurant la fonction main-libre et/ou la déportation des signaux utiles vers une antenne de toit et/ou la charge de la batterie du terminal cellulaire ;
- un accessoire de bureau, assurant la fonction main-libre et/ou la charge de la batterie du terminal cellulaire ;
- un accessoire de transfert de données (par exemple, une "PC Card" destinée à être insérée dans un lecteur PCMIA d'un micro-ordinateur).

Tous ces accessoires sont aujourd'hui très largement utilisés avec les terminaux cellulaires traditionnels. Il existe donc un réel besoin de pouvoir utiliser ces accessoires même lorsque le terminal cellulaire coopère avec un module satellite. En outre, lorsque le terminal et le module satellite sont ainsi mis en coopération, on souhaite pouvoir utiliser les accessoires aussi bien avec le terminal cellulaire qu'avec le module satellite.

L'invention a notamment pour objectif de pallier ces différents inconvénients de l'état de la technique.

Plus précisément, l'un des objectifs de la présente invention est de fournir un ensemble de radiocommunication, du type comprenant notamment un terminal cellulaire et un module satellite, qui puisse comprendre en outre au moins un accessoire.

L'invention a également pour objectif de fournir un tel ensemble de radiocommunication dont le ou les accessoires puissent être utilisés aussi bien avec le terminal cellulaire qu'avec le module satellite.

Un autre objectif de l'invention est de fournir un tel ensemble de radiocommunication qui, par rapport à un ensemble de radiocommunication connu du même type, présente une faible complexité supplémentaire et un faible surcoût.

Ces différents objectifs, ainsi que d'autres qui apparaîtront par la suite, sont atteints selon l'invention à l'aide d'un ensemble de radiocommunication, du type comprenant un terminal cellulaire mobile et un module satellite mobile pouvant coopérer l'un avec l'autre et comprenant chacun des moyens d'émission/réception de signaux utiles, ledit ensemble possédant notamment les deux modes de fonctionnement suivants : mode terrestre et mode satellite, selon que les moyens d'émission/réception utilisés sont ceux dudit terminal ou dudit module satellite,
caractérisé en ce que ledit ensemble de radiocommunication comprend en outre :
- au moins un premier accessoire connecté audit module satellite, ledit terminal cellulaire étant connecté audit module satellite ou audit premier accessoire, ledit premier accessoire permettant audit ensemble de radiocommunication de présenter au moins un mode de fonctionnement supplémentaire ;
- des moyens de sélection de l'un des modes de fonctionnement ;
- des premiers moyens d'aiguillage, commandés par lesdits moyens de sélection de façon à aiguiller les signaux utiles :
   * depuis, respectivement vers, les moyens d'émission/réception concernés, à savoir ceux du terminal cellulaire ou ceux du module satellite, en fonction du mode de fonctionnement sélectionné, et
   * vers, respectivement depuis, des moyens de traitement compris dans ledit ensemble et dont le choix est fonction du mode de fonctionnement sélectionné.

Le principe général de l'invention consiste donc à cascader les différents éléments de l'ensemble de radiocommunication (à savoir le terminal cellulaire, le module satellite, et le ou les accessoires) et à aiguiller les signaux utiles au sein de ces éléments cascadés, en fonction du mode de fonctionnement sélectionné par l'utilisateur.

Un tel aiguillage des signaux évite à l'utilisateur d'avoir à modifier les connexions physiques entre les éléments cascadés, tout en lui offrant la possibilité, grâce à une pluralité de modes de fonctionnement possibles, d'activer sélectivement tel ou tel élément.

Il est important de noter que, selon la présente invention, le terminal cellulaire n'est pas obligatoirement connecté au module satellite, avec ce dernier lui-même connecté à un accessoire. En effet, le terminal cellulaire peut être connecté à un accessoire, le module satellite étant alors connecté à cet accessoire. En d'autres termes, plusieurs ordres de cascade des différents éléments peuvent être envisagés sans sortir du cadre de la présente invention. On peut également prévoir des cascades à branches multiples, dans lesquelles plusieurs éléments (par exemple plusieurs accessoires) sont placés en aval d'un même élément (par exemple le module satellite). Dans tous les cas de cascade, il convient de s'assurer que tous les éléments de la cascade, excepté le dernier, disposent des moyens d'aiguillage adéquats pour répondre à tous les cas de figure possibles.

Dans la présente description, par connexion entre deux éléments on entend le fait que chacun des deux éléments comprend un ou plusieurs connecteurs et que le(s) connecteur(s) de l'un des deux éléments coopère(nt) avec le(s) connecteur(s) de l'autre des deux éléments. Il est clair par ailleurs que la présente invention peut être mise en oeuvre quel que soit le type des connecteurs, et notamment que ces derniers utilisent une technique avec ou sans contact.

De même, la présente invention peut être mise en oeuvre quel que soit le type des moyens d'aiguillage.

De façon avantageuse, lesdits moyens de traitement, dont le choix est fonction du mode de fonctionnement sélectionné, appartiennent au groupe comprenant :
- un microphone et/ou un haut-parleur compris dans ledit terminal cellulaire ;
- un microphone et/ou un haut-parleur compris dans ledit premier accessoire ;
- des moyens de transfert de données compris dans ledit premier accessoire.

Dans un mode de réalisation particulier de l'invention, ledit ensemble de radiocommunication comprend en outre des seconds moyens d'aiguillage, commandés par lesdits moyens de sélection, de façon à aiguiller un courant de charge :
- depuis des moyens de charge compris dans ledit premier accessoire, et
- vers au moins une batterie dudit ensemble, à savoir celle du terminal cellulaire et/ou celle du module satellite selon le mode de fonctionnement sélectionné.

Avantageusement, ledit premier accessoire appartient au groupe comprenant :
- les accessoires de voiture assurant la fonction main-libre et/ou la déportation des signaux utiles vers au moins une antenne de toit et/ou la charge d'au moins une batterie dudit ensemble ;
- les accessoires de bureau assurant la fonction main-libre et/ou la charge d'au moins une batterie dudit ensemble ;
- les accessoires de transfert de données.

Il est à noter que, généralement, l'accessoire main libre voiture comprend un support (placé près du tableau de bord de la voiture, et sur lequel s'emboîte le terminal cellulaire) et un boîtier électronique (connecté d'un côté au support et de l'autre à un écouteur et à un microphone). Par conséquent, la connexion à un tel accessoire main libre voiture peut se faire soit sur le support soit sur le boîtier électronique. Pour des raisons d'accessibilité et de solidité de la fixation amovible, on choisira plutôt d'effectuer la connexion sur le support.

Préférentiellement, lesdits premiers et/ou seconds moyens d'aiguillage de signaux utiles assurent une fonction d'aiguillage :
- d'une part dans ledit terminal cellulaire, et
- d'autre part dans ledit module satellite, si ledit terminal cellulaire est connecté audit module satellite, ou dans ledit premier accessoire, si ledit terminal cellulaire est connecté audit premier accessoire.

Selon une variante avantageuse de l'invention, ledit ensemble de radiocommunication comprend en outre au moins un second accessoire connecté audit module satellite ou audit premier accessoire, ledit terminal cellulaire étant connecté audit module satellite ou audit premier accessoire, ledit premier accessoire étant connecté audit module satellite, ledit second accessoire permettant audit ensemble de radiocommunication de présenter d'autre(s) mode(s) de fonctionnement.

Dans cette variante, l'ensemble de radiocommunication comprend donc, outre le terminal cellulaire et le module satellite, au moins un premier et un second accessoires. Le second accessoire est en bout de cascade.

Avantageusement, ledit premier accessoire appartient au groupe comprenant :
- les accessoires de voiture assurant la fonction main-libre et/ou la déportation des signaux utiles vers au moins une antenne de toit et/ou la charge d'au moins une batterie dudit ensemble ;
- les accessoires de bureau assurant la fonction main-libre et/ou la charge d'au moins une batterie dudit ensemble,
et ledit second accessoire appartient au groupe comprenant :
- les accessoires de transfert de données.

Ainsi, l'accessoire de transfert de données est en extrémité de cascade. Bien que cela ne soit pas complètement exclu (et reste donc dans le cadre de la présente invention), il semble en effet difficile de cascader un élément en aval d'un accessoire de transfert de données. Par exemple, dans le cas d'une "PC Card" destinée à être insérée dans un lecteur PCMIA d'un micro-ordinateur, on comprend que ni la PC Card (qui est trop petite) ni le micro-ordinateur (à moins de le modifier) ne peuvent servir de support de connexion pour un autre élément de l'ensemble de radiocommunication.

De façon préférentielle, les signaux utiles de parole sont codés numériquement jusqu'à l'entrée de chaque accessoire et/ou jusqu'à un convertisseur numérique/analogique compris dans le terminal cellulaire.

De cette façon, on obtient une bonne immunité au bruit.

D'autres caractéristiques et avantages de l'invention apparaîtront à la lecture de la description suivante de plusieurs modes de réalisation préférentiels de l'invention, donnés à titre d'exemples indicatifs et non limitatifs, et des dessins annexés, dans lesquels :
- la figure 1 présente un schéma simplifié d'un premier mode de réalisation particulier d'un ensemble de radiocommunication selon l'invention ;
- la figure 2 présente un schéma synoptique détaillant et explicitant en partie l'ensemble de radiocommunication de la figure 1 ;
- la figure 3 présente un schéma simplifié d'un second mode de réalisation particulier d'un ensemble de radiocommunication selon l'invention ;
- la figure 4 présente un schéma simplifié d'un troisième mode de réalisation particulier d'un ensemble de radiocommunication selon l'invention.

L'invention concerne donc un ensemble de radiocommunication, du type comprenant un terminal cellulaire mobile et un module satellite mobile pouvant coopérer l'un avec l'autre et comprenant chacun des moyens d'émission/réception de signaux utiles. Sur toutes les figures, le terminal cellulaire et le module satellite sont référencés 1 et 2 respectivement.

On notera que sur les figures, les proportions entre les différents éléments ne sont pas respectés. En effet, ces figures visent uniquement à montrer la configuration, en termes de connexions, des différents éléments constitutifs de l'ensemble de radiocommunication.

Selon la présente invention, l'ensemble de radiocommunication comprend en outre un ou plusieurs accessoires, des moyens de sélection (par l'utilisateur) de l'un des modes de fonctionnement de l'ensemble, et des moyens d'aiguillage, commandés par les moyens de sélection de façon à aiguiller les signaux utiles et/ou le courant de charge entre les différents éléments de l'ensemble de radiocommunication.

Dans la suite de la description, on présente successivement trois modes de réalisation particuliers d'un ensemble de radiocommunication selon l'invention. Pour chacun de ces modes de réalisation, on explique comment les différents éléments sont connectés entre eux et comment les signaux (utiles et/ou de charge) sont aiguillés entre ces différents éléments.

On rappelle que le principe de l'invention consiste à munir l'ensemble de radiocommunication d'un ou plusieurs accessoires, de façon que l'utilisateur puisse disposer d'un plus grand choix de modes de fonctionnement. En fonction du mode de fonctionnement sélectionné par l'utilisateur, l'invention consiste également à aiguiller les signaux utiles et/ou le courant de charge. Un tel aiguillage est possible grâce à la présence de moyens d'aiguillage adéquats, répartis dans certains des éléments en fonction de la configuration de connexion de tous les éléments de l'ensemble de radiocommunication.

D'une façon générale, les signaux utiles sont aiguillés depuis (respectivement vers) les moyens d'émission/réception du terminal cellulaire ou ceux du module satellite, en fonction du mode de fonctionnement sélectionné, et vers (respectivement depuis) des moyens de traitement (microphone et/ou haut-parleur du terminal cellulaire, microphone et/ou haut-parleur d'un accessoire, moyens de transfert de données d'un accessoire, etc) compris dans l'ensemble et dont le choix est également fonction du mode de fonctionnement sélectionné.

De même, d'une façon générale, le courant de charge est aiguillé depuis des moyens de charge compris dans l'accessoire, et vers au moins une batterie de l'ensemble, à savoir celle du terminal cellulaire ou celle du module satellite selon le mode de fonctionnement sélectionné.

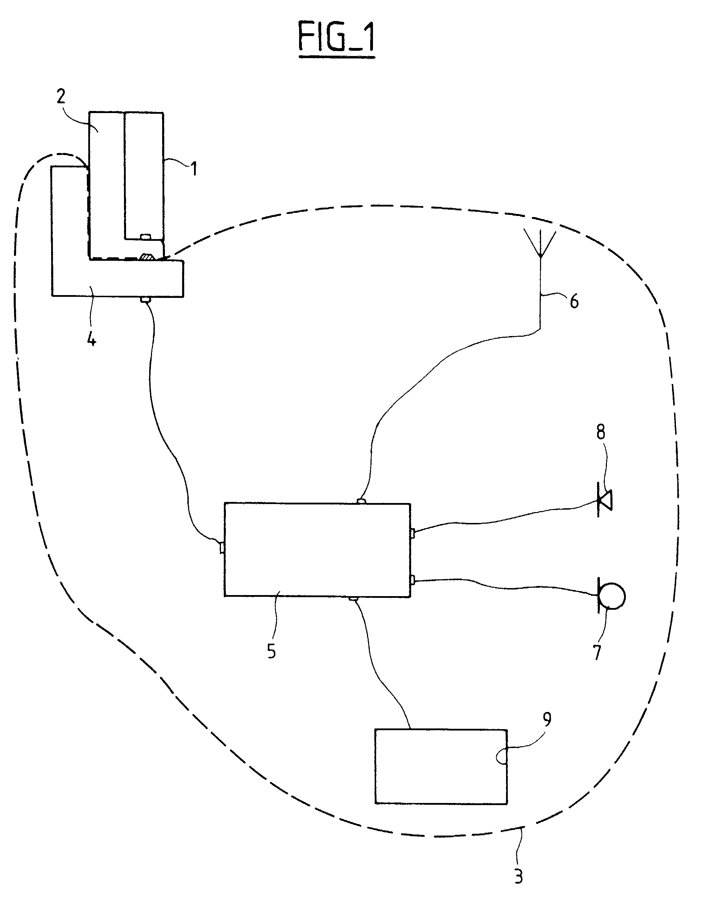

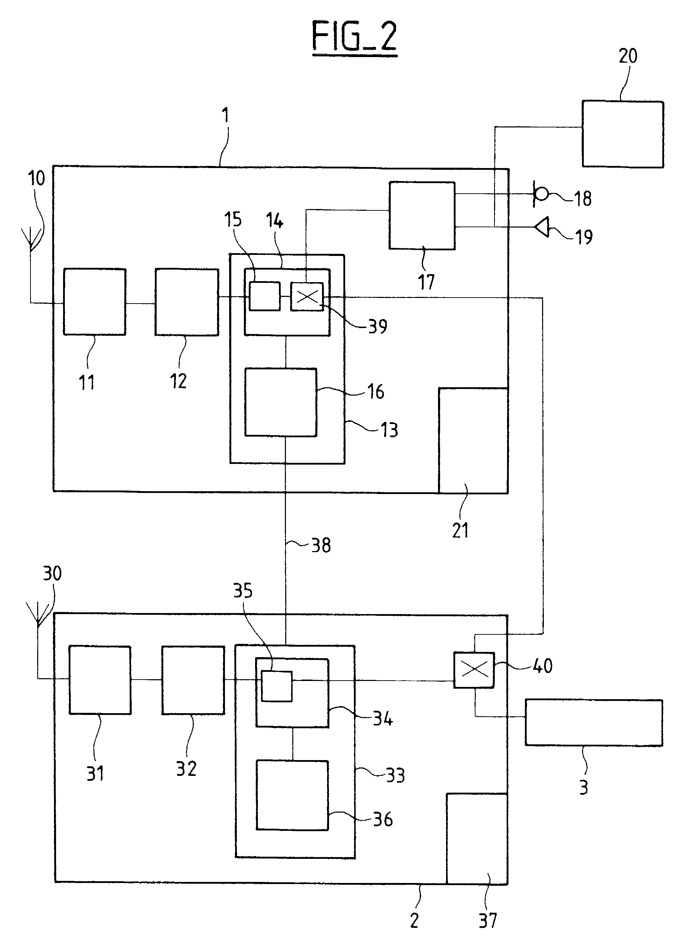

On présente maintenant, en relation avec les figures 1 et 2, un premier mode de réalisation d'un ensemble de radiocommunication selon la présente invention.

Dans ce premier mode de réalisation, l'ensemble de radiocommunication comprend, outre le terminal cellulaire 1 et le module satellite 2, un accessoire voiture 3 (ou "car kit" en anglais).

De façon classique (cf fig.2), le terminal cellulaire 1 comprend une antenne 10, un circuit radio 11, un codeur canal 12, un circuit bande de base 13 (comprenant un processeur 14 (DSP), assurant notamment un codage parole 15, et un contrôleur 16), un convertisseur numérique/analogique et analogique/numérique 17, un microphone 18, un haut-parleur 19, (éventuellement) un casque 20 et une batterie 21. Dans la suite de la description, on appelle "moyens d'émission/réception" l'ensemble comprenant notamment l'antenne 10, le circuit radio 11, le codeur canal 12 et le circuit bande de base 13.

Le module satellite 2 se distingue du terminal cellulaire 1 en ce qu'il ne comprend aucun moyen audio. En d'autres termes, il comprend une antenne 30, un circuit radio 31, un codeur canal 32, un circuit bande de base 33 (comprenant un processeur 34 (DSP), assurant notamment un codage parole 35, et un contrôleur 36) et une batterie 37.

Le contrôleur 16 du terminal cellulaire 1 commande, selon une relation maître-esclave et via un signal de commande 38, le circuit bande de base 33 du module satellite.

Egalement de façon classique, l'accessoire voiture 3 comprend un support 4 (placé par exemple près du tableau de bord de la voiture) connecté à un boîtier électronique 5 lui-même connecté à une antenne de toit 6 (permettant de déporter l'émission/réception des signaux radio utiles), un microphone 7 et un haut-parleur 8 (permettant d'assurer la fonction main-libre), et des moyens de charge 9 (permettant de recharger la batterie du terminal cellulaire ou celle du module satellite).

Comme représenté schématiquement sur les figures 1 et 2, le terminal cellulaire 1 est ici connecté au module satellite 2 qui est lui-même connecté au support 4 de l'accessoire voiture 3.

Selon la présente invention, le terminal cellulaire 1 et le module satellite 2 comprennent des moyens d'aiguillage, notés 39 et 40 respectivement. En outre, l'ensemble de radiocommunication comprend des moyens de sélection d'un mode de fonctionnement parmi une pluralité de modes possibles.

Ces moyens de sélection sont par exemple compris dans le terminal cellulaire 1, sous la forme d'une fonction de sélection mise en oeuvre par le contrôleur 16 de ce terminal et accessible à l'utilisateur via une interface homme/machine classique (par exemple un clavier et un écran). Dans ce cas, le contrôleur 16 commande d'une part directement les moyens 39 d'aiguillage compris dans le terminal cellulaire 1, et d'autre part indirectement (via le contrôleur esclave 36 du module satellite) les moyens 40 d'aiguillage compris dans le module satellite 2.

Avec cette configuration, l'utilisateur dispose par exemple des modes de fonctionnement suivants :
* concernant les signaux utiles :
   - un premier mode "terrestre" actif sur le haut-parleur 19 et le microphone 18 du terminal cellulaire 1. Les signaux utiles de parole sont aiguillés entre les moyens d'émission/réception du terminal cellulaire 1 et le haut-parleur 19 et le microphone 18 du terminal cellulaire 1 ;
   - un second mode "terrestre" actif sur le haut-parleur 8 et le microphone 7 de l'accessoire voiture 3. Les signaux utiles de parole sont aiguillés entre les moyens d'émission/réception du terminal cellulaire 1 et le haut-parleur 8 et le microphone 7 de l'accessoire voiture 3 ;
   - un premier mode "satellite" actif sur le haut-parleur 19 et le microphone 18 du terminal cellulaire 1. Les signaux utiles de parole sont aiguillés entre les moyens d'émission/réception du module satellite 2 et le haut-parleur 19 et le microphone 18 du terminal cellulaire 1 ;
   - un second mode "satellite" actif sur le haut-parleur 8 et le microphone 7 de l'accessoire voiture 3. Les signaux utiles de parole sont aiguillés entre les moyens d'émission/réception du module satellite 2 et le haut-parleur 8 et le microphone 7 de l'accessoire voiture 3 ;
* concernant le courant de charge :
   - un premier mode de charge de la batterie 21 du terminal cellulaire 1. Le courant de charge est aiguillé entre les moyens de charge 9 de l'accessoire voiture 3 et la batterie 21 du terminal cellulaire 1 ;
   - un second mode de charge de la batterie 37 du module satellite 2. Le courant de charge est aiguillé entre les moyens de charge 9 de l'accessoire voiture 3 et la batterie 37 du module satellite 2.

Il est à noter que les deux modes de charge ne sont pas exclusifs l'un de l'autre : on peut charger les batteries 21, 37 du terminal cellulaire 1 et du module satellite 2 en parallèle.

Les signaux de parole sont par exemple codés numériquement en code Manchester (un échantillon de parole est codé sur un caractère avec 1 bit start, 13 bits utiles et 2 bits stop) à 128 kbit/s, avec un échantillonnage de 8 kHz. Ce codage numérique est utilisé jusqu'à l'entrée de l'accessoire main-libre et du convertisseur numérique/analogique du terminal cellulaire.

Une alternative possible est l'usage de signaux analogiques. Cependant ceux-ci présentent une moins bonne immunité au bruit.

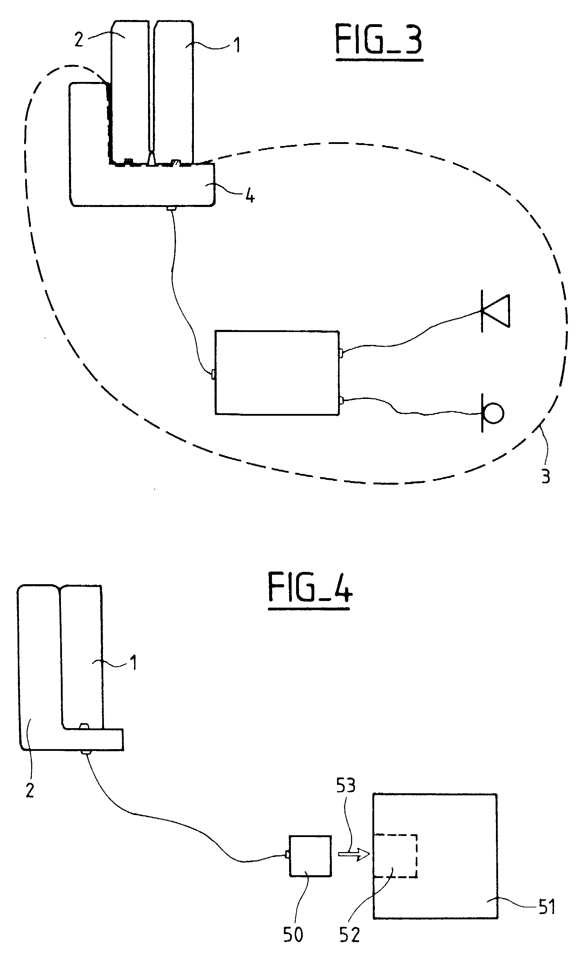

On présente maintenant, en relation avec la figure 3, un second mode de réalisation d'un ensemble de radiocommunication selon la présente invention.

Comme dans le premier mode de réalisation, l'ensemble de radiocommunication comprend, outre le terminal cellulaire 1 et le module satellite 2, un accessoire voiture 3 (par souci de simplification, tous les éléments de ce dernier ne sont pas représentés). Ce second mode de réalisation diffère du premier en ce que le terminal cellulaire 1 est connecté directement au support 4 de l'accessoire voiture 3 (et non pas via le module satellite 2). Dans ce cas, c'est le support 4 de l'accessoire voiture 3 qui comprend des moyens d'aiguillage (non représentés) et non pas le module satellite 2, puisque le module satellite 2 constitue le dernier élément de la cascade. L'homme du métier sachant aisément passer du premier au second mode de réalisation, le second mode de réalisation n'est pas décrit plus en détail.

On présente maintenant, en relation avec la figure 4, un troisième mode de réalisation d'un ensemble de radiocommunication selon la présente invention.

Dans ce troisième mode de réalisation, l'ensemble de radiocommunication comprend, outre le terminal cellulaire 1 et le module satellite 2, un accessoire de transfert de données 50. Cet accessoire 50 est par exemple une "PC Card" destinée à être insérée (comme indiqué par la flèche référencée 53) dans un lecteur PCMIA 52 d'un micro-ordinateur portable ou fixe 51.

Avec cette configuration, l'utilisateur dispose par exemple des deux modes de fonctionnement suivants :
- un mode "terrestre" de transfert de données vers/depuis la "PC Card". Les données sont aiguillées entre le terminal cellulaire 1 et la "PC Card" ;
- un mode "satellite" de transfert de données vers/depuis la "PC Card". Les données sont aiguillées entre le module satellite 2 et la "PC Card".

Il est clair que de nombreux autres modes de réalisation de l'invention peuvent être envisagés sans sortir du cadre de l'invention.

On peut notamment prévoir de connecter l'accessoire de transfert de données 50 au support 4 de l'accessoire voiture 3 (soit dans la configuration de la figure 1, soit dans celle de la figure 3). Dans ce cas, l'accessoire de voiture 3 comprend également des moyens d'aiguillage (non représentés) permettant d'aiguiller les signaux de données jusqu'à l'accessoire de transfert de données 50, lorsque l'utilisateur a choisi un mode de fonctionnement nécessitant l'utilisation de cet accessoire.

On peut aussi prévoir de remplacer (soit dans la configuration de la figure 1, soit dans celle de la figure 3) l'accessoire voiture 3 par un accessoire bureau (non représenté) offrant les fonctions main-libre et/ou charge.

Il convient à nouveau de noter que les différentes variantes précitées ne constituent en aucune façon une liste exhaustive de toutes les variantes possibles dans le cadre de la présente invention.

## Revendications

1. Ensemble de radiocommunication, du type comprenant un terminal cellulaire mobile (1) et un module satellite mobile (2) pouvant coopérer l'un avec l'autre et comprenant chacun des moyens (10 à 13, 30 à 33) d'émission/réception de signaux utiles, ledit ensemble possédant notamment les deux modes de fonctionnement suivants : mode terrestre et mode satellite, selon que les moyens d'émission/réception utilisés sont ceux dudit terminal ou dudit module satellite,
caractérisé en ce que ledit ensemble de radiocommunication comprend en outre :
- au moins un premier accessoire (3 ; 50) connecté audit module satellite (2), ledit terminal cellulaire (1) étant connecté audit module satellite ou audit premier accessoire, ledit premier accessoire permettant audit ensemble de radiocommunication de présenter au moins un mode de fonctionnement supplémentaire ;
- des moyens de sélection de l'un des modes de fonctionnement ;
- des premiers moyens d'aiguillage (39, 40), commandés par lesdits moyens de sélection de façon à aiguiller les signaux utiles :
* depuis, respectivement vers, les moyens d'émission/réception concernés, à savoir ceux du terminal cellulaire ou ceux du module satellite, en fonction du mode de fonctionnement sélectionné, et
* vers, respectivement depuis, des moyens de traitement compris dans ledit ensemble et dont le choix est fonction du mode de fonctionnement sélectionné.

2. Ensemble selon la revendication 1, caractérisé en ce que lesdits moyens de traitement, dont le choix est fonction du mode de fonctionnement sélectionné, appartiennent à un groupe comprenant :
- un microphone (18) et/ou un haut-parleur (19) compris dans ledit terminal cellulaire (1) ;
- un microphone (7) et/ou un haut-parleur (8) compris dans ledit premier accessoire (3) ;
- des moyens de transfert de données compris dans ledit premier accessoire (50).

3. Ensemble selon l'une quelconque des revendications 1 et 2, caractérisé en ce que ledit ensemble de radiocommunication comprend en outre des seconds moyens d'aiguillage, commandés par lesdits moyens de sélection, de façon à aiguiller un courant de charge :
- depuis des moyens de charge (9) compris dans ledit premier accessoire (3), et
- vers au moins une batterie dudit ensemble, à savoir celle (21) du terminal cellulaire (1) et/ou celle (37) du module satellite (2) selon le mode de fonctionnement sélectionné.

4. Ensemble selon l'une quelconque des revendications 1 à 3, caractérisé en ce que ledit premier accessoire appartient à un groupe comprenant :
- les accessoires de voiture (3) assurant la fonction main-libre et/ou la déportation des signaux utiles vers au moins une antenne de toit et/ou la charge d'au moins une batterie dudit ensemble ;
- les accessoires de bureau assurant la fonction main-libre et/ou la charge d'au moins une batterie dudit ensemble ;
- les accessoires de transfert de données (50).

5. Ensemble selon l'une quelconque des revendications 1 à 4, caractérisé en ce que lesdits premiers et/ou seconds moyens d'aiguillage de signaux utiles assurent une fonction d'aiguillage :
- d'une part dans ledit terminal cellulaire (1), et
- d'autre part dans ledit module satellite (2), si ledit terminal cellulaire est connecté audit module satellite, ou dans ledit premier accessoire (3 ; 50), si ledit terminal cellulaire est connecté audit premier accessoire.

6. Ensemble selon l'une quelconque des revendications 1 à 5, caractérisé en ce que ledit ensemble de radiocommunication comprend en outre au moins un second accessoire connecté audit module satellite ou audit premier accessoire, ledit terminal cellulaire étant connecté audit module satellite ou audit premier accessoire, ledit premier accessoire étant connecté audit module satellite, ledit second accessoire permettant audit ensemble de radiocommunication de présenter d'autre(s) mode(s) de fonctionnement.

7. Ensemble selon la revendication 6, caractérisé en ce que ledit premier accessoire appartient à un groupe comprenant :
- les accessoires de voiture (3) assurant la fonction main-libre et/ou la déportation des signaux utiles vers au moins une antenne de toit et/ou la charge d'au moins une batterie dudit ensemble ;
- les accessoires de bureau assurant la fonction main-libre et/ou la charge d'au moins une batterie dudit ensemble,
et en ce que ledit second accessoire appartient au groupe comprenant :
- les accessoires de transfert de données (50).

8. Ensemble selon l'une quelconque des revendications 1 à 7, caractérisé en ce que les signaux utiles de parole sont codés numériquement jusqu'à l'entrée de chaque accessoire (3) et/ou jusqu'à un convertisseur numérique/analogique (17) compris dans le terminal cellulaire (1).
